# EUROPEAN PATENT SPECIFICATION

(11) **EP 4 324 772 B1**
(45) Date of publication and mention of the grant of the patent: **06.05.2026**
(21) Application number: 22786747.0
(22) Date of filing: 09.03.2022
(51) Int. Cl.: B65G 54/02, G01N 35/00, G01N 35/04, B65G 43/08

(54) **CONVEYING DEVICE, AND ANALYTE ANALYSIS SYSTEM**
FÖRDERVORRICHTUNG UND ANALYTANALYSESYSTEM
DISPOSITIF DE TRANSPORT, ET SYSTÈME D'ANALYSE D'ANALYTE

(30) Priority: 12.04.2021 JP 2021066973
(43) Date of publication of application: 21.02.2024
(73) Proprietor: HITACHI HIGH-TECH CORPORATION, Tokyo 105-6409 (JP)
(72) Inventor: AOYAMA Yasuaki, Tokyo 100-8280 (JP)
(74) Representative: Mewburn Ellis LLP
(86) International application number: PCT/JP2022/010349
(87) International publication number: WO 2022/219975

(56) References cited:
- JP-A- 2020 142 913
- JP-A- 2020 142 913
- JP-A- 2021 010 254
- JP-A- 2021 010 254

## Description

### Technical Field

The present invention relates to a conveyance device used for a specimen analysis system that performs analysis of a biological sample (hereinafter called a "specimen") such as blood or urine or a specimen preprocessing device that performs preprocessing for analysis, and a specimen analysis system including such conveyance device.

### Background Art

A specimen analysis system and a specimen preprocessing device are provided with a conveyance device for conveying a specimen. PTL 1 discloses such a conveyance device. The conveyance device of PTL 1 includes a plurality of container carriers. Each of the container carriers is configured to include at least one magnetically activation device (preferably at least one permanent magnet) and convey a specimen container including a biological sample. The conveyance device includes a conveyance plane adapted to convey the plurality of container carriers and several electromagnetic actuators arranged below the conveyance plane.

The electromagnetic actuator is adapted to move the container carrier arranged on the conveyance plane by applying a magnetic force to the container carrier. The electromagnetic actuator can control the movement of the container carrier on the conveyance plane by driving the container carrier under the control of a control device. The control device executes a movement control such that three or more container carriers are movable on the conveyance plane simultaneously and independently of one another.

For the purpose of quick inspection of a specimen, there is a demand for a conveyance device that can convey a large amount of container carriers at a high speed, has less stoppage of the container carrier, and can quickly repair an error. As described in PTL 1, a conventional specimen conveyance device has a function for detecting abnormality in specimen conveyance.

By comparing the position of a specimen container according to a schedule with an actual position of the specimen container having been detected, the device of PTL 1 described above detects a gradual decrease in the conveyance speed based on an increase in friction caused by contamination of the conveyance plane, for example. If a gradual decrease in the conveyance speed is detected, the control device performs control to increase the magnetic force generated by the electromagnetic actuator or displays an error message that the conveyance speed falls below a given threshold.

However, with the conventional conveyance device, even when a decrease in the conveyance speed is detected, it has been difficult to accurately determine the cause thereof. Specifically, it has been difficult to determine whether the decrease in the conveyance speed is due to deterioration or abnormality (contamination, scratch, or the like) generated on the conveyance plane or due to a decrease in the thrust acting on the specimen container caused by a change in another situation. Therefore, it is desired to provide a conveyance device that can determine a cause of a decrease in the conveyance speed. PTL 2 discloses a conveying device which detects an abnormality due to a change in the surface state of the conveying plane. The conveying device has a conveying plane for conveying thereabove a conveying container equipped with a magnetic body, a position detection unit for detecting the position of the conveying container above the conveying plane, a magnetic pole disposed below the conveying plane and equipped with a core and a coil, a drive unit for applying a voltage to the magnetic pole, and a calculation unit for controlling the drive unit. The calculation unit calculates the conveying speed of the conveying container on the basis of the position of the conveying container above the conveying plane, and the time at which the conveying container passes through the position, and detects the surface state of the conveying plane on the basis of the calculated conveying speed of the conveying container.

### Citation List

### Patent Literature

PTL 1: JP 2015-502525 A
PTL 2: JP 2021 010254 A

### Summary of Invention

### Technical Problem

The present invention is to provide a conveyance device and a specimen analysis system that can accurately determine a cause of a decrease in conveyance speed of a conveyed body.

### Solution to Problem

A conveyance device of the present invention is according to claim 1.

### Advantageous Effects of Invention

According to the present invention, it is possible to provide a conveyance device and a specimen analysis system that can accurately determine a cause of a decrease in conveyance speed of a conveyed body.

### Brief Description of Drawings

[FIG. 1] FIG. 1 is a schematic view illustrating a specimen analysis system 100 according to a first embodiment.
[FIG. 2] FIG. 2 is a schematic view illustrating a specimen preprocessing device 150 and a specimen analysis system 200 according to the first embodiment.
[FIG. 3] FIG. 3 is a perspective view illustrating an example of a configuration of a conveyance device 102 included in the specimen analysis systems 100 and 200 and the specimen preprocessing device 150 according to the first embodiment.
[FIG. 4] FIG. 4 is a cross-sectional view schematically illustrating a cross-sectional structure of the conveyance device 102.
[FIG. 5] FIG. 5 is a schematic view illustrating a force received by a conveyed body 10 from teeth in the conveyance device 102.
[FIG. 6] FIG. 6 is a schematic view illustrating a force received by the conveyed body 10 from the teeth in the conveyance device 102.
[FIG. 7] FIG. 7 is a graph showing an example of a change in thrust 61 depending on a position on a conveyance plate 15.
[FIG. 8] FIG. 8 is a graph showing an example of a change in a perpendicular force 62 depending on a position on the conveyance plate 15.
[FIG. 9] FIG. 9 is a flowchart explaining the operation of the specimen analysis system 100 according to the first embodiment.
[FIG. 10] FIG. 10 is a graph showing a change in the perpendicular force 62 due to a change in the size of a distance Dg (gap Dg) in a perpendicular direction between the conveyed body 10 and a conveyance surface of the conveyance plate 15 used in a specimen analysis system according to a second embodiment.
[FIG. 11] FIG. 11 is a schematic view illustrating the specimen analysis system 100 according to a third embodiment.

### Description of Embodiments

The present embodiments will be described below with reference to the accompanying drawings. In the accompanying drawings, functionally same elements may be denoted by the same numbers. It should be noted that the accompanying drawings illustrate embodiments and implementation examples in accordance with the principle of the present disclosure. The accompanying drawings are intended for the purpose of understanding of the present disclosure and are by no means intended for the purpose of limiting interpretation of the present disclosure. The description herein is merely exemplary and is not intended to limit the scope of the claims or application of the present disclosure in any way.

The present embodiments have been described in sufficient detail for a person skilled in the art to practice the present disclosure. It should be understood that other implementations and forms are also possible and changes of the configurations and structures and replacement of various elements are possible without departing from the scope and spirit of the technical idea of the present disclosure. Accordingly, the following description should not be construed in a limited manner.

### [First embodiment]

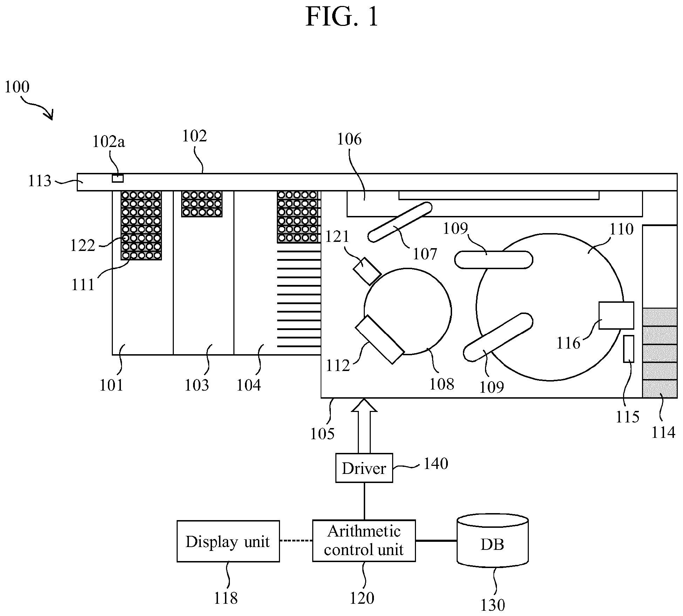

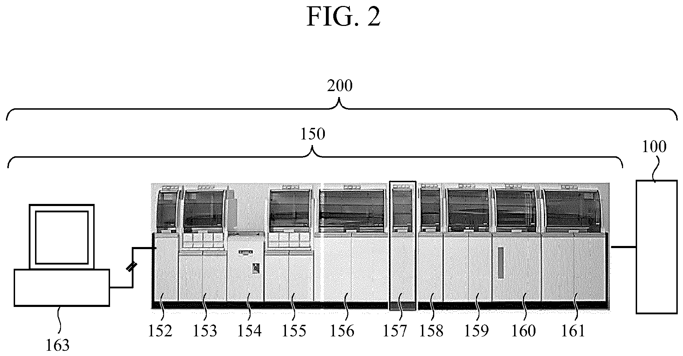

The first embodiment is not covered by the subject-matter of the claims. The specimen analysis system 100 according to the first embodiment will be described with reference to FIGS. 1 and 2. The overall configuration of the specimen analysis system 100 will be described with reference to FIG. 1. Then the specimen preprocessing device 150 will be described with reference to FIG. 2.

As illustrated in FIG. 1, the specimen analysis system 100 is a device that performs pipetting of a specimen and a reagent into a reaction container, causes the specimen and the reagent to react, and measures this reacted liquid. The specimen analysis system 100 includes an import unit 101, a conveyance device 102 (conveyance line), a storing unit 103, a buffer 104, an analysis unit 105, an emergency rack loading port 113, a display unit 118, an arithmetic control unit 120, a database 130, and a driver 140.

The import unit 101 is a device for placing a specimen rack 111 holding a plurality of specimen containers 122 containing biological samples such as blood or urine. The conveyance device 102 is a line that conveys the specimen rack 111 placed in the import unit 101. The conveyance device 102 is configured to be able to convey the specimen rack 111 having a permanent magnet or a magnetic body by controlling a magnetic circuit. Details of the configuration of the conveyance device 102 will be described later. The emergency rack loading port 113 is a loading port for loading, into the analysis unit 105, a specimen rack (calibration rack) mounted with a standard solution or a specimen rack 111 holding the specimen container 122 containing a specimen that needs to be analyzed in an emergency. The emergency rack loading port 113 is provided in the conveyance device 102. The storing unit 103 is a device that stores the specimen rack 111 holding the specimen container 122 that contains a specimen for which the analysis unit 105 has ended analysis. The number of the specimen containers 122 that can be held by one specimen rack 111 is not limited to a specific number.

The buffer 104 is a device for holding the plurality of the specimen racks 111 conveyed by the conveyance device 102 so that a pipetting order of the specimens in the specimen racks 111 can be changed. The analysis unit 105 analyzes the specimen contained in the specimen container 122 conveyed from the buffer 104 via a conveyor line 106. Specifically, the analysis unit 105 includes, as an example, the conveyor line 106, a specimen pipetting nozzle 107, a reaction disk 108, a reagent disk 110, a reagent pipetting nozzle 109, a cleaning mechanism 112, a reagent tray 114, a reagent ID reader 115, a reagent loader 116, and a spectrophotometer 121.

The conveyor line 106 is a conveyance path through which the specimen rack 111 in the buffer 104 is imported into the analysis unit 105. The specimen pipetting nozzle 107 is configured to be rotatable about a rotation shaft and configured to be movable also in an up-down direction. The specimen pipetting nozzle 107 is configured to perform pipetting of the specimen from the specimen container 122 conveyed by the conveyor line 106 to a reaction container of the reaction disk 108. The reaction disk 108 includes a plurality of reaction containers to which a specimen and a reagent are dispensed and caused to react.

The reagent disk 110 is a disk-shaped container containing unit configured to be rotatable for disposing a plurality of reagent containers. The reagent pipetting nozzle 109 is a nozzle for performing pipetting of a reagent from a reagent container in the reagent disk 110 to the reaction container of the reaction disk 108. The cleaning mechanism 112 cleans the reaction container of the reaction disk 108. The spectrophotometer 121 measures the absorbance of a reaction liquid in the reaction container by measuring transmitted light obtained from a light source (not illustrated) through the reaction liquid in the reaction container.

The reagent tray 114 is a tray for placing a reagent when performing reagent registration into the specimen analysis system 100. The reagent ID reader 115 is a reading device for reading a reagent ID attached to a reagent placed on the reagent tray 114 to acquire reagent information. The reagent loader 116 is equipment that imports a reagent into the reagent disk 110. The display unit 118 is display equipment for displaying an analysis result of the concentration of a certain component in a liquid sample such as blood or urine. The arithmetic control unit 120 is configured by a computer. The arithmetic control unit 120 controls the operation of each mechanism in the specimen analysis system 100 via the driver 140 or the like. The arithmetic control unit 120 performs arithmetic processing of obtaining the concentration of a certain component in a liquid sample such as blood or urine. Furthermore, in accordance with various data, the arithmetic control unit 120 detects an abnormality occurring on the conveyance surface of the conveyance device 102, a decrease in the conveyance speed of the specimen rack 111 conveyed by the conveyance device 102, and the like. The database 130 is a database that stores data used for such detection.

The analysis processing of the specimen by the specimen analysis system 100 is generally executed in the following order. First, the specimen rack 111 is placed in the import unit 101 or the emergency rack loading port 113. The specimen rack 111 is imported, by the conveyance device 102, into the buffer 104 in which the specimen rack 111 can be randomly accessed. The specimen analysis system 100 imports, into the analysis unit 105, by the conveyor line 106, the specimen rack 111 having the highest priority according to a priority rule from the specimen racks 111 housed in the buffer 104.

The specimen rack 111 that has reached the analysis unit 105 is further transferred to a specimen fractionation position near the reaction disk 108 by the conveyor line 106. The specimen in the specimen container 122 held in the specimen rack 111 is aspirated by the specimen pipetting nozzle 107 and discharged to the reaction container of the reaction disk 108. The specimen is aspirated and discharged (fractionated) a necessary number of times by the specimen pipetting nozzle 107 in accordance with an analysis item requested for the specimen.

When fractionation processing for all the specimen containers 122 in the specimen rack 111 ends, the specimen rack 111 is conveyed to the buffer 104 again. The specimen rack 111 for which all the specimen fractionation processing including automatic retesting have ended is transferred to the storing unit 103 by the conveyor line 106 and the conveyance device 102.

The reagent used for analysis is fractionated from the reagent container on the reagent disk 110 to the reaction container from which the specimen has been previously fractionated by the reagent pipetting nozzle 109. When a specimen and a reagent are injected into the reaction container, a mixed liquid of the specimen and the reagent in the reaction container is stirred by a stirring mechanism not illustrated. Thereafter, the mixed liquid after stirring is irradiated with measurement light from the spectrophotometer 121. The light transmitted through the mixed liquid is received by a light receiver of the spectrophotometer 121, and measurement regarding the mixed liquid is executed in accordance with an output signal thereof. The output signal of the light receiver is transmitted to the arithmetic control unit 120 via an A/D converter and an interface not illustrated. Then, the arithmetic control unit 120 performs an arithmetic operation to obtain the concentration of a certain component of the specimen. The result is displayed on the display unit 118 or the like or stored in a storage unit not illustrated.

Note that the configuration of the specimen analysis system 100 of FIG. 1 is an example. The constituent elements of FIG. 1 can be changed to other elements as appropriate, some constituent elements can be deleted, or other elements can be added. The analysis unit 105 is not limited to one for biochemical analysis, and may be one for immunoassay. The number of the analysis units 105 does not need to be one, and two or more analysis units can be provided. Also in this case, the analysis unit 105 and the import unit 101 are connected by the conveyance device 102, and the specimen rack 111 can be conveyed from the import unit 101.

Next, the overall configuration of the specimen preprocessing device 150 will be described with reference to FIG. 2. FIG. 2 is a view schematically illustrating the overall configuration of the specimen preprocessing device 150.

The specimen preprocessing device 150 is a device that executes various preprocessing necessary for analysis in the specimen analysis system 100. As an example, this specimen preprocessing device 150 includes a plurality of units as basic elements of a closing unit 152, a specimen storing unit 153, an empty holder stacker 154, a specimen loading unit 155, a centrifuge unit 156, a liquid amount measurement unit 157, an opening unit 158, a child specimen container preparation unit 159, a pipetting unit 160, and a transfer unit 161 from the left side to the right side in FIG. 2. An operation unit PC 163 is included as a control unit that controls the operations of these plurality of units. The specimen processed by the specimen preprocessing device 150 is conveyed to the specimen analysis system 100.

The specimen loading unit 155 is a unit for loading the specimen container 122 containing a specimen into the specimen preprocessing device 150. The centrifuge unit 156 is a unit that performs centrifugal processing on the specimen container 122 having been loaded. The liquid amount measurement unit 157 is a unit that performs measurement of the liquid amount of the specimen contained in the specimen container 122. The opening unit 158 is a unit that opens the specimen container 122 having been loaded. The child specimen container preparation unit 159 is a unit that performs preparation necessary for pipetting, in the next pipetting unit 160, the specimen contained in the specimen container 122 having been loaded.

The pipetting unit 160 is a unit that performs subdivision of the centrifuged specimen for the specimen analysis system 100 to perform analysis, and attaches a barcode or the like to the subdivided specimen container 122 and the child specimen container. The transfer unit 161 is a unit that performs classification of the child specimen containers having been subjected to pipetting and prepares for transfer to the specimen analysis system. The closing unit 152 is a unit for closing the specimen container 122 and the child specimen container. The specimen storing unit 153 is a unit that stores the specimen container 122 having been closed.

The conveyance device 102 is provided as a conveying mechanism of the specimen rack 111 that holds the specimen container 122 between these units or between the specimen preprocessing device 150 and the specimen analysis system 100. Note that the specimen preprocessing device 150 does not need to include all the configurations described above, and a unit can be further added or some units or a partial configuration can be deleted.

The specimen analysis system of the present embodiment may be the specimen analysis system 200 including the specimen preprocessing device 150 as illustrated in FIG. 2 and the specimen analysis system 100. The specimen preprocessing device 150 alone is also a part of the specimen analysis system. Thus, the specimen preprocessing device 150 alone also constitutes the specimen analysis system, and can include the conveyance device 102 inside the specimen preprocessing device. In the specimen analysis system 200, the conveyance device 102 can connect not only the inside of each of the specimen preprocessing device 150 and the specimen analysis system 100 but also between the both, and can convey the specimen container 122.

The specimen analysis systems 100 and 200 and the specimen preprocessing device 150 of the present embodiment include the above-described conveyance device 102. Thereby, it is possible to convey the specimen container 122 to the conveyance destination with high efficiency. It is also possible to shorten the time until the analysis result is obtained. With few conveyance troubles, the burden on the laboratory technician can be reduced.

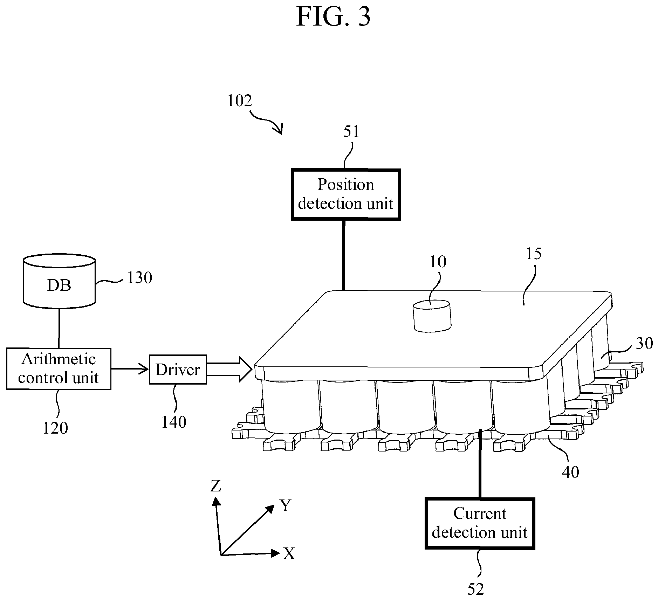

The perspective view of FIG. 3 illustrates an example of the configuration of the conveyance device 102 included in the specimen analysis systems 100 and 200 and the specimen preprocessing device 150 according to the first embodiment. This conveyance device 102 substantially includes the conveyance plate 15, a winding 30, and a yoke 40.

The conveyance plate 15 is a flat plate whose upper surface is a smooth planar conveyance surface. The conveyed body 10 (for example, the specimen container 122) including a magnetic body or a permanent magnet can slide on the upper surface (conveyance surface) of the conveyance plate 15. The winding 30 is wound around teeth (not illustrated) made of a magnetic body. The teeth are magnetically coupled to the yoke 40 made of a magnetic body at a lower part (-Z direction) of the conveyance plate 15 of the conveyance device 102. The winding 30 and the teeth constitute a magnetic circuit unit that generates a magnetic flux for conveying the conveyed body 10.

The winding 30 is arrayed in the X direction and the Y direction on the lower surface side of the conveyance plate 15 together with the teeth. The winding 30 and the teeth are not necessarily arrayed in parallel in the X direction and the Y direction. The winding 30 and the teeth are arrayed along the conveyance direction of the conveyed body 10. The conveyed body 10 can be slid along the upper surface of the conveyance plate 15 by magnetic coupling with the yoke 40 arranged below the winding 30 and the teeth. When a current flows through the winding 30, the magnetic flux generated in the teeth and the magnetic flux generated by the permanent magnet or the magnetic body of the conveyed body 10 act to generate the thrust of the conveyed body 10. Note that the conveyed body 10 may cover the permanent magnet with a magnetic or non-magnetic cover or the like. It is sufficient that a force can be relatively generated between the teeth and the conveyed body 10. A drive circuit (not illustrated) for causing a current to flow through the winding 30 is connected to each winding 30.

By covering the conveyed body 10 with a resin or the like having good sliding performance, it is possible to reduce the frictional force between the conveyed body 10 and the conveyance plate 15. In the conveyed body 10, by reducing the area on the side in contact with the conveyance plate 15, for example, by providing a recess portion, it is possible to reduce the frictional force. Thereby, stable conveyance can be achieved, and the sensitivity of abnormality detection of the conveyance surface can be increased.

The conveyance device 102 illustrated in FIG. 3 includes a position detection unit 51 and a current detection unit 52. The position detection unit 51 is a detection device that detects the position on the conveyance plate 15 of the conveyed body 10. As an example, the position detection unit 51 can include a Hall element that detects movement of the conveyed body 10 by a change of magnetism, a search coil, a length measuring meter, a laser displacement meter, or a camera. The position detection unit 51 is not limited to a specific method as long as the relative positional relationship between the conveyed body 10 and each winding 30 (teeth) can be detected.

The current detection unit 52 is a device that detects the current flowing through the winding 30 and the timing thereof. As an example, the current detection unit 52 may be any of detection by a shunt resistor, a CT type, and a PT type, and is not limited to a specific type.

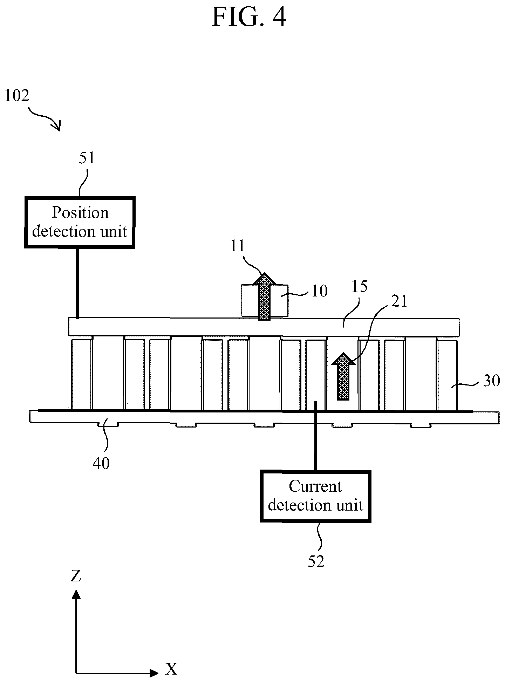

FIG. 4 schematically illustrates a cross-sectional structure on the XZ plane of the conveyance device 102 illustrated in FIG. 3. FIG. 4 also illustrates a relationship of a magnetic flux when the conveyed body 10 is conveyed in the X direction. Illustrated are a magnetic flux 11 generated by the permanent magnet or the magnetic body of the conveyed body 10 and a magnetic flux 21 generated by the winding 30 wound around the teeth at the front in the traveling direction (X direction). By an interaction of these magnetic fluxes 11 and 21, the conveyed body 10 is conveyed in the X direction. At this time, the conveyed body 10 moves by the thrust (force in the X direction) acting on the conveyed body 10.

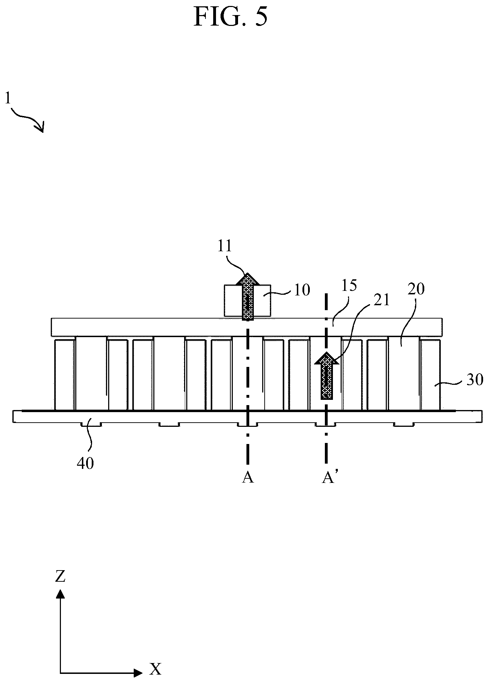

The force received by the conveyed body 10 from the teeth in a certain section will be described with reference to FIG. 5. FIG. 5 is a schematic view of the conveyed body 10 being conveyed in the X direction in the schematic view of FIG. 4. Described is the force received by the conveyed body 10 while the conveyed body 10 moves from a position A to a position A'. When the conveyed body 10 is at the position A, a current flows through the winding 30 immediately below the position A' in the traveling direction of the conveyed body 10. Thereby, the magnetic flux 21 is generated in the teeth around which the winding 30 is wound. The magnetic flux 21 of the teeth and the magnetic flux 11 of the conveyed body 10 interact with each other, and the conveyed body 10 moves in the direction (X direction) of the teeth generating the magnetic flux 21.

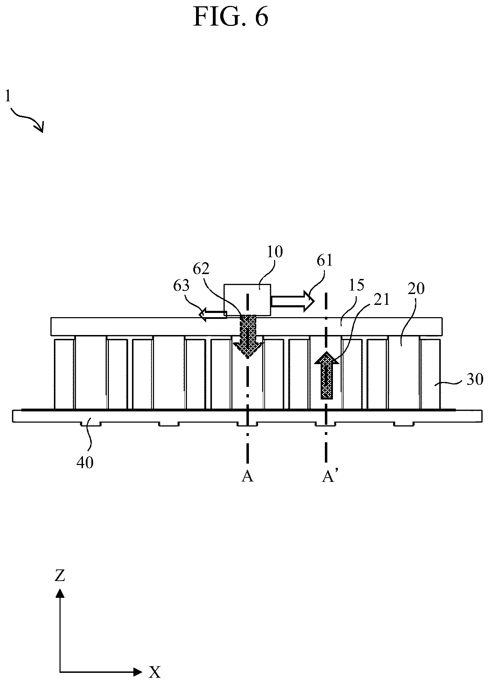

As illustrated in FIG. 6, the force generated by the conveyed body 10 at this time is divided into the thrust 61 for moving the conveyed body 10 in the X direction along the surface (conveyance surface) of the conveyance plate 15 and the perpendicular force 62 in the -Z direction. The perpendicular force 62 is generally equal to the thrust 61 or greater than the thrust 61 and can become a very large force. The combined force of the perpendicular force 62 and the gravity due to the own weight (mass) of the conveyed body 10 acts on the conveyed body 10 in the perpendicular direction. As a result, when the conveyed body 10 is about to move in the X direction, a force proportional to the resultant force in the perpendicular direction is generated as a frictional force 63. The frictional force 63 has a value obtained by multiplying a friction coefficient µ between the conveyed body 10 and the surface of the conveyance plate 15 by the above resultant force. That is, the effective force for moving the conveyed body 10 in the X direction is obtained by subtracting the frictional force 63 from the thrust 61.

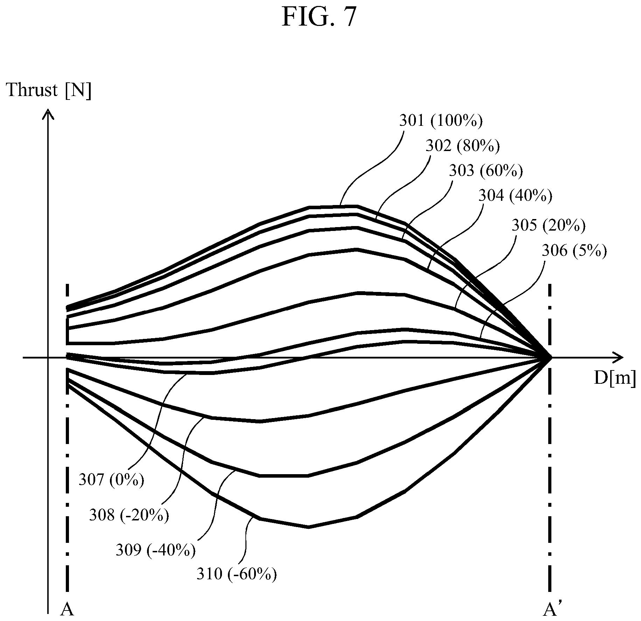

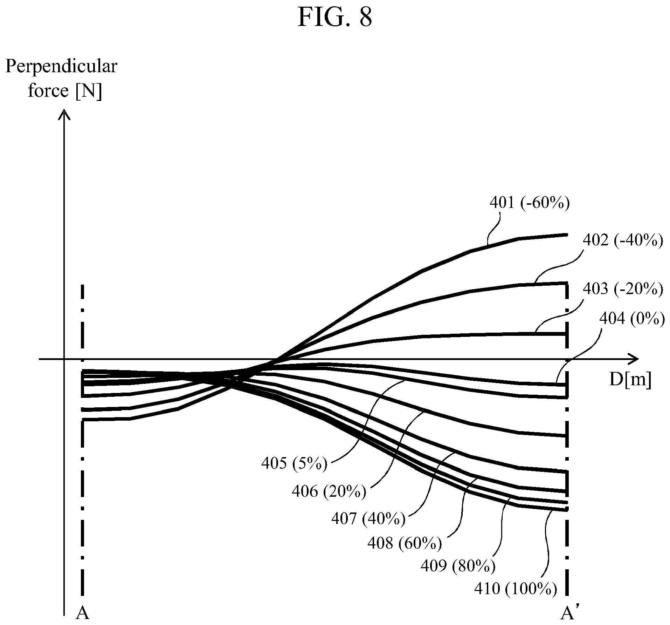

The thrust 61 and the perpendicular force 62 acting on the conveyed body 10 can be calculated by simulation based on magnetic field analysis. FIG. 7 is a graph showing an example of a change due to the position of the thrust 61 between the positions A and A'. FIG. 8 is a graph showing an example of a change due to the position of the perpendicular force 62. Here, as an example, the horizontal axis represents a section A-A', and the distance between the positions A and A' is 20 mm. The vertical axis in FIG. 7 represents the magnitude of the thrust 61. The vertical axis in FIG. 8 represents the magnitude of the perpendicular force 62.

In FIG. 7, a curve 301 represents a change in thrust 61 when a rated current (100%) flows through the winding 30. A curve 302 represents a change in thrust 61 when a current of 80% of the rated current flows through the winding 30. Other than those, a curve 303 represents a change in the thrust 61 when a current of 60% of the rated current flows through the winding 30. A curve 304 represents a change in the thrust 61 when a current of 40% of the rated current flows through the winding 30. A curve 305 represents a change in the thrust 61 when a current of 20% of the rated current flows through the winding 30. A curve 306 represents a change in the thrust 61 when a current of 5% of the rated current flows through the winding 30. A curve 307 represents a change in the thrust 61 when no current (0%) flows through the winding 30.

A curve 308 represents a change in the thrust 61 when a current having an orientation opposite to the rated current and a magnitude of 20% (-20%) of the rated current flows. A curve 309 represents a change in the thrust 61 when a current having an orientation opposite to the rated current and a magnitude of 40% (-40%) of the rated current flows. A curve 310 represents a change in the thrust 61 when a current having an orientation opposite to the rated current and a magnitude of 60% (-60%) of the rated current flows. In this manner, the thrust 61 changes by the change of the current flowing through the winding 30. Even when currents of the same magnitude flow, the thrust 61 changes depending on the position on the conveyance plate 15.

FIG. 8 is a graph showing a change in the perpendicular force 62 depending on the position (section A-A') on the conveyance plate 15. A curve 410 represents a change in the perpendicular force 62 when the rated current (100%) flows through the winding 30. Similarly, a curve 409 represents a change in the perpendicular force 62 when a current of 80% of the rated current flows through the winding 30. A curve 408 represents a change in the perpendicular force 62 when a current of 60% of the rated current flows through the winding 30. A curve 407 represents a change in the perpendicular force 62 when a current of 40% of the rated current flows through the winding 30. A curve 406 represents a change in the perpendicular force 62 when a current of 20% of the rated current flows through the winding 30. A curve 405 represents a change in the perpendicular force 62 when a current of 5% of the rated current flows through the winding 30. A curve 404 represents a change in the perpendicular force 62 when no current (0%) flows through the winding 30.

A curve 403 represents a change in the perpendicular force 62 when a current having an orientation opposite to the rated current and having a magnitude of 20% of the rated current flows through the winding 30 (-20%). A curve 402 represents a change in the thrust when a current having an orientation opposite to the rated current and having a magnitude of 40% of the rated current flows through the winding 30 (-40%). A curve 401 represents a case where a current having an orientation opposite to the rated current and having a magnitude of 60% of the rated current flows through the winding 30 (-60%). As illustrated in FIG. 8, the magnitude of the perpendicular force 62 varies depending on the position on the conveyance plate 15, and the magnitude varies depending on the current flowing through the winding 30 even at the same position.

The database 130 stores data regarding changes in the position and current of the thrust 61 and the perpendicular force 62 as illustrated in FIGS. 7 and 8. The various data may be stored in the database 130 in the form of a graph as illustrated in FIGS. 7 and 8, or may be stored in a table form. The arithmetic control unit 120 is an abnormality determination unit that determines presence or absence of an occurrence of an abnormality in the conveyance device 102 in accordance with the various data stored in the database 130 and detection results of the position detection unit 51 and the current detection unit 52. Here, the abnormality in the conveyance device 102 includes, for example, the following.
(1) Decrease in the conveyance speed of the specimen rack 111 to be conveyed and the like
(2) Abnormality (change in friction coefficient) of the conveyance surface of the conveyance plate 15 of the conveyance device 102

On the conveyance surface of the conveyance plate 15 of the conveyance device 102, the friction coefficient may increase due to a scratch or a foreign matter, and conversely, the friction coefficient may decrease due to inclusion of oil or moisture. The arithmetic control unit 120 of the present embodiment detects a change in the friction coefficient of the conveyance surface in accordance with the detection results of the position detection unit 51 and the current detection unit 52 and the data of the database 130. Thereby, the arithmetic control unit 120 can determine presence or absence of an occurrence of an abnormality of the conveyance surface.

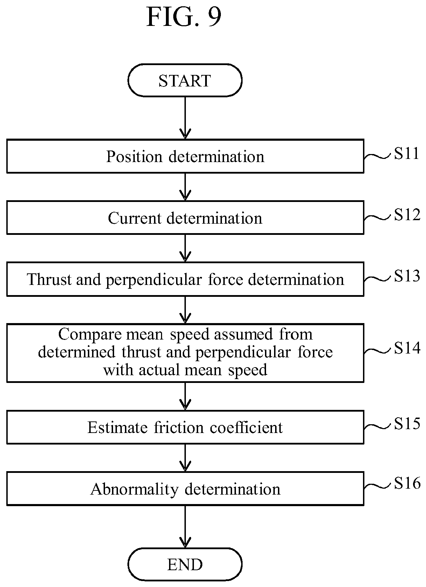

A procedure of abnormality determination when the conveyed body 10 is moved in the section A-A' will be described with reference to the flowchart of FIG. 9. First, while moving the conveyed body 10 between the section A'-A, the arithmetic control unit 120 detects the position of the conveyed body 10 in accordance with an output of the position detection unit 51 (step S11). The arithmetic control unit 120 also detects the magnitude of the current flowing through the corresponding winding 30 at certain time intervals in accordance with the output of the current detection unit 52 (step S12). At this time, in a case of executing the abnormality determination with higher accuracy, it is preferable to move the conveyed body 10 having a known mass between the section A-A'. It is more preferable to use, at the time of abnormality determination, the conveyed body 10 having a lower surface (sliding surface) with a known shape in addition to a known mass.

Subsequently, the arithmetic control unit 120 determines changes in the thrust 61 and the perpendicular force 62 applied to the conveyed body 10 in accordance with the data regarding the change in the current detected by the current detection unit 52 during the movement of the conveyed body 10 between the section A-A' and the data stored in the database 130 (step S13). Then, in accordance with the arithmetic result of the changes in the thrust 61 and the perpendicular force 62, the arithmetic control unit 120 further performs the arithmetic operation of the frictional force assumed under the perpendicular force 62 and the own weight of the conveyed body 10 and the mean speed of the conveyed body 10. Then, the mean speed subjected to the arithmetic operation is compared with the actual mean speed of the conveyed body 10 subjected to an arithmetic operation from the detection output of the position detection unit 51 (step S14). With the calculated frictional force, it is possible to also estimate with high accuracy the friction coefficient between the conveyed body 10 and the conveyance surface (step S15). With this friction coefficient, it is possible to detect deterioration of the conveyance surface or the sliding surface of the conveyed body 10 (step S16). Note that in step S14, in addition to (or instead of) comparing the assumed mean speed with the mean speed actually measured by the position detection unit 51, it is also possible to compare the assumed position of the conveyed body 10 with the position of the conveyed body 10 actually measured by the position detection unit 51.

As seen from FIGS. 7 and 8, the thrust 61 and the perpendicular force 62 greatly change depending on how much current to apply to which winding 30. For example, regarding the thrust 61, the change width of the thrust 61 with respect to the change in the current is large in the central part (10 mm) of the section A-A'. The change width of the thrust 61 with respect to the change in the current is small near the position A and the position A' (see FIG. 7). Regarding the perpendicular force 62, the change width of the perpendicular force 62 with respect to the change in current is small on the left side from the central part (10 mm) of the section A-A'. The change width of the perpendicular force 62 with respect to the change in current is large on the right side from the central part (10 mm) of the section A-A'. Therefore, in step S14 of FIG. 9, instead of comparing the mean speed or position of the conveyed body 10 in the entire section A-A', the mean speed or position of the conveyed body 10 in the central part of the section A-A' may be compared. Deterioration or the like of the conveyance surface can be detected with higher accuracy by comparing the mean speed or position in the central part.

As described above, according to the first embodiment, it becomes possible to detect the change in the friction coefficient of the conveyance surface of the conveyance plate 15 and to accurately determine the presence or absence of an occurrence of an abnormality of the conveyance surface.

### [Second embodiment]

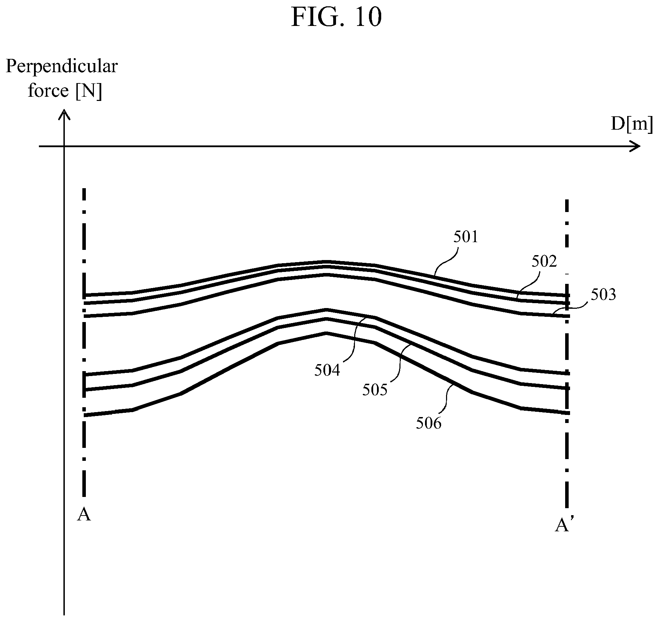

Next, the specimen analysis system 100 or 200 according to the second embodiment will be described with reference to FIG. 10. The specimen analysis system 100 or 200 of the second embodiment includes the conveyance device 102 similar to that of the first embodiment. However, the second embodiment is configured so that the database 130 also stores the data shown in FIG. 10 in addition to the data of FIGS. 7 and 8. The abnormality determination of the conveyance device 102 is executed in accordance with the data of FIG. 10, and the second embodiment is different from the first embodiment in this point.

The graph of FIG. 10 shows a change in the perpendicular force 62 due to a change in the size of the distance Dg (gap Dg) in the perpendicular direction between the conveyed body 10 and the conveyance surface of the conveyance plate 15. In the graph of FIG. 10, the horizontal axis indicates the position between the section A-A, and the vertical axis indicates the perpendicular force acting on the conveyed body 10. Curves 501 to 506 are curves showing a change in the perpendicular force 62 depending on the position in a case where the gap Dg calculated by the magnetic field analysis simulation is set to a different value (each of the curves 501 to 506 are obtained assuming a case where the current of the winding 30 is 0). The curve 501 indicates a change in the perpendicular force 62 when the gap Dg is a normal value (100%). The curve 502 indicates a change in the perpendicular force 62 when the gap Dg is reduced to 97.3% of the normal value. The curve 503 indicates a change in the perpendicular force 62 when the gap Dg is reduced to 93.3% of the normal value. The curve 504 indicates a change in the perpendicular force 62 when the gap Dg is reduced to 80% of the normal value. The curve 505 indicates a change in the perpendicular force 62 when the gap Dg is reduced to 77.3% of the normal value. The curve 506 indicates a change in the perpendicular force 62 when the gap Dg is reduced to 73.3% of the normal value.

As indicated by the curves 501 to 506 in FIG. 10, when the gap Dg between the conveyed body 10 and the conveyance surface of the conveyance plate 15 changes, the perpendicular force 62 generated between the conveyed body 10 and the conveyance plate 15 changes. Therefore, in the second embodiment, the conveyed body 10 is moved, and the behavior of the conveyed body 10 at that time is compared with the curves 501 to 506 of FIG. 10 in a state where the current flowing in the winding 30 is set to 0. Then the arithmetic control unit 120 estimates the size of the gap Dg generated on the conveyance surface of the conveyance plate 15. Thereafter, the arithmetic control unit 120 estimates the perpendicular force 62 at each position also in consideration of the estimated gap Dg, and estimates the friction coefficient of the conveyance surface in the same manner as in the first embodiment. In the second embodiment, the perpendicular force 62 is estimated in accordance with the size of the gap Dd in accordance with the graph of FIG. 10. Accordingly, the friction coefficient of the conveyance surface can be estimated with higher accuracy than that in the first embodiment.

Note that as illustrated in FIG. 10, the absolute value of the perpendicular force 62 in a state where the current flowing through the winding 30 is 0 decreases near the central part of the section A-A', and increases near the positions A and A'. Therefore, it is possible to consider the influence of the perpendicular force by acquiring the position information of the conveyed body 10 near the central part of the section A-A', further acquiring the position information at the positions A and **A',** and performing linear interpolation at other positions. As a result, the accuracy of detection of the state of the conveyance surface can be improved as compared with the first embodiment.

### [Third embodiment]

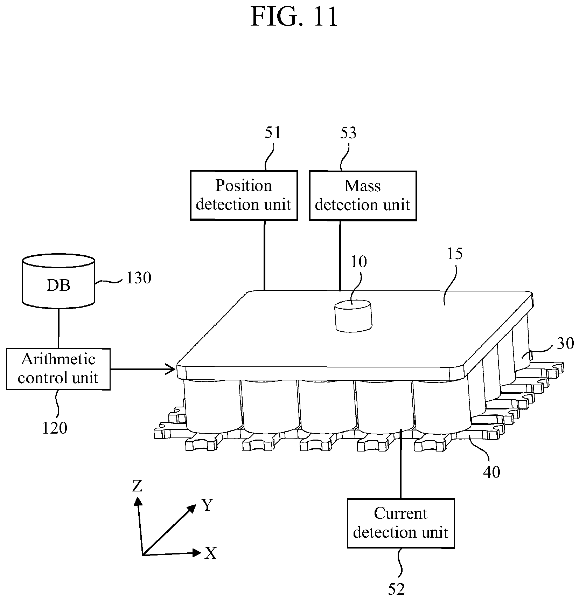

The specimen analysis system 100 and the specimen preprocessing device 150 according to the third embodiment will be described with reference to FIG. 11. The overall configuration of the specimen analysis system 100 is the same as that of the first embodiment (FIGS. 1 and 2), and thus redundant description will be omitted.

The configuration of the conveyance device 102 of the third embodiment will be described with reference to FIG. 11. The same constituent elements as those in FIG. 3 are also denoted by the same reference signs in FIG. 10, and thus redundant description will be omitted. The conveyance device 102 of the third embodiment includes a mass detection unit 53 that detects the mass of the conveyed body 10 in addition to the constituent elements of the first embodiment.

The mass of the conveyed body 10 may vary greatly depending on the type of the specimen. Even for the same type of specimen, the content of the specimen containers varies greatly, or the number of specimen containers mounted on one specimen rack 111 varies greatly. Even if the mass of the specimen container is known, the mass can be changed by pipetting of the specimen in the middle. In such a case, the mass of the conveyed body 10 varies, and this causes variation in the conveyance speed of the conveyed body 10. Therefore, in the third embodiment, the mass detection unit 53 detects the mass of the conveyed body 10, and the presence or absence of an abnormality of the conveyance device 102 is determined in consideration of the information on the mass. The mass detection unit 53 detects the mass of the conveyed body 10 by a weight sensor or the like. The mass detection unit 53 may take in information regarding the mass of the conveyed body 10 obtained from the outside instead of detecting the mass. That is, the mass detection unit 53 is one aspect of a mass information acquisition unit that acquires mass information.

According to the third embodiment, by the mass detection unit 53 acquiring the information regarding the mass of the conveyed body 10, it is possible to accurately analyze the information regarding the conveyance surface of the conveyance device 102. By acquiring the information regarding the state of the lower surface of the conveyed body 10 in addition to the information regarding the mass of the conveyed body 10, it becomes possible to more accurately detect the state of the conveyance surface.

### <Others>

The present invention is not limited to the above embodiments, and includes various modifications other than the above. For example, the embodiments described above have been described in detail for the purpose of explaining the present invention in an easy-to-understand manner, and are not necessarily limited to those having all the described configurations. It is possible to replace a part of the configuration of a certain embodiment with the configuration of another embodiment, and it is also possible to add the configuration of another embodiment to the configuration of a certain embodiment. Another configuration can be added to, deleted from, or replaced with a part of the configuration of each embodiment.

### Reference Signs List

- 10: conveyed body
- 11: magnetic flux of permanent magnet
- 15: conveyance plate
- 21: magnetic flux of teeth by winding
- 30: winding
- 40: yoke
- 51: position detection unit
- 52: current detection unit
- 53: mass detection unit
- 61: thrust
- 62: perpendicular force
- 63: frictional force
- 100, 200: specimen analysis system
- 101: import unit
- 102: conveyance device
- 103: storing unit
- 104: buffer
- 105: analysis unit
- 106: conveyor line
- 107: specimen pipetting nozzle
- 108: reaction disk
- 109: reagent pipetting nozzle
- 110: reagent disk
- 111: specimen rack (conveyed body)
- 112: cleaning mechanism
- 113: emergency rack loading port
- 114: reagent tray
- 115: reader
- 116: reagent loader
- 118: display unit
- 120: arithmetic control unit
- 121: spectrophotometer
- 122: specimen container, child specimen container
- 150: specimen preprocessing device
- 152: closing unit
- 153: specimen storing unit
- 154: empty holder stacker
- 155: specimen load unit
- 156: centrifuge unit
- 157: liquid amount measurement unit
- 158: opening unit
- 159: child specimen container preparation unit
- 160: pipetting unit
- 161: transfer unit
- 163: operation unit PC

## Claims

1. A conveyance device (102) comprising:
a conveyance plate (15) that can convey a conveyed body (10) along a conveyance surface;
a magnetic circuit unit arranged on an opposite side of the conveyance surface of the conveyance plate (15) and having a winding (30) wound around teeth;
a position detection unit (51) configured to detect a position of the conveyed body (10);
a current detection unit (52) configured to detect a current in the winding (30);
a gap estimation unit configured to estimate a gap (Dg) that is a distance in a perpendicular direction between the conveyed body (10) and the conveyance surface;
a data storage unit (130) configured to store data indicating a relationship among a position on a conveyance surface of the conveyance plate (15), a current flowing through the winding (30), a force applied to the conveyed body (10), and a size of the gap (Dg); and
an abnormality determination unit configured to determine an abnormality regarding conveyance of the conveyed body (10) including deterioration or abnormality of the conveyance surface based on the gap (Dg) estimated by the gap estimation unit, the position detected by the position detection unit (51), the current detected by the current detection unit (52), and the data.

2. The conveyance device (102) according to claim 1, wherein the abnormality determination unit is configured to determine, in accordance with the data, a thrust (61) for moving the conveyed body (10) along the conveyance surface and a perpendicular force (62) acting on the conveyed body (10) in a direction perpendicular to the conveyance surface based on the position detected by the position detection unit (51) and the current detected by the current detection unit (52), and further configured to determine the abnormality by performing arithmetic operation of a friction coefficient of the conveyance surface based on the perpendicular force (62).

3. The conveyance device (102) according to claim 1, further comprising a mass information acquisition unit (53) configured to acquire information regarding a mass of the conveyed body (10), wherein
the abnormality determination unit is configured to determine an abnormality regarding conveyance of the conveyed body (10) including deterioration or abnormality of the conveyance surface based on the position detected by the position detection unit (51), the current detected by the current detection unit (52), the data, and the information regarding the mass.

4. The conveyance device (102) according to claim 1, wherein the abnormality determination unit is configured to execute determination of the abnormality by moving the conveyed body (10) having a known mass on the conveyance surface.

5. A specimen analysis system (100, 200) comprising:
an analysis unit (105) configured to be injected with a specimen from a conveyed body (10) and to analyze the specimen; and
a conveyance device (102) according to claim 1, configured to convey the conveyed body (10) toward the analysis unit (105).

6. The specimen analysis system (100, 200) according to claim 5, wherein the abnormality determination unit is configured to determine, in accordance with the data, a thrust (61) for moving the conveyed body (10) along the conveyance surface and a perpendicular force (62) acting on the conveyed body (10) in a direction perpendicular to the conveyance surface based on the position detected by the position detection unit (51) and the current detected by the current detection unit (52), and further configured to determine the abnormality by performing arithmetic operation of a friction coefficient of the conveyance surface based on the perpendicular force (62).

7. The specimen analysis system (100, 200) according to claim **5,** further comprising a mass information acquisition unit (53) configured to acquire information regarding a mass of the conveyed body (10), wherein
the abnormality determination unit is configured to determine an abnormality regarding conveyance of the conveyed body (10) including deterioration or abnormality of the conveyance surface based on the position detected by the position detection unit (51), the current detected by the current detection unit (52), the data, and the information regarding the mass.

8. The specimen analysis system (100, 200) according to claim 5, wherein the abnormality determination unit is configured to execute determination of the abnormality by moving the conveyed body (10) having a known mass on the conveyance surface.

## Patentansprüche

1. Fördervorrichtung (102), die Folgendes umfasst:
eine Förderplatte (15), die einen beförderten Körper (10) entlang einer Förderoberfläche befördern kann;
eine Magnetkreis-Einheit, die auf einer der Förderoberfläche entgegengesetzten Seite der Förderplatte (15) angeordnet ist und eine Wicklung (30) aufweist, die um Zähne gewickelt ist;
eine Positionsdetektionseinheit (51), die ausgelegt ist, um eine Position des beförderten Körpers (10) zu detektieren;
eine Stromdetektionseinheit (52), die ausgelegt ist, um einen Strom in der Wicklung (30) zu detektieren;
eine Spaltschätzungseinheit, die ausgelegt ist, um einen Spalt (Dg) abzuschätzen, der ein Abstand in einer lotrechten Richtung zwischen dem beförderten Körper (10) und der Förderoberfläche ist;
eine Datenspeichereinheit (130), die ausgelegt ist, um Daten zu speichern, die eine Beziehung aus einer Position auf einer Förderoberfläche der Förderplatte (15), einem Strom, der durch die Wicklung (30) fließt, einer Kraft, die auf den beförderten Körper (10) beaufschlagt wird, und einer Größe des Spalts (Dg) angeben; und
eine Anomaliebestimmungseinheit, die ausgelegt ist, um eine Anomalie betreffend die Beförderung des beförderten Körpers (10), einschließlich einer Verschlechterung oder einer Anomalie der Förderoberfläche, basierend auf dem Spalt (Dg), der durch die Spaltschätzungseinheit geschätzt wird, der Position, die durch die Positionsdetektionseinheit (51) detektiert wird, dem Strom, der durch die Stromdetektionseinheit (52) detektiert wird, und den Daten zu bestimmen.

2. Fördervorrichtung (102) nach Anspruch 1, wobei die Anomaliebestimmungseinheit ausgelegt ist, um gemäß den Daten einen Schub (61) zum Bewegen des beförderten Körpers (10) entlang der Förderoberfläche und eine lotrechte Kraft (62), die auf den beförderten Körper (10) in eine Richtung lotrecht zur Förderoberfläche einwirkt, basierend auf der Position, die durch die Positionsdetektionseinheit (51) detektiert wird, und dem Strom, der durch die Stromdetektionseinheit (52) detektiert wird, zu bestimmen, und die ferner ausgelegt ist, um die Anomalie zu bestimmen, indem ein arithmetischer Vorgang eines Reibungskoeffizienten der Förderoberfläche basierend auf der lotrechten Kraft (62) durchgeführt wird.

3. Fördervorrichtung (102) nach Anspruch 1, die ferner eine Masseninformationserfassungseinheit (53) umfasst, die ausgelegt ist, um Informationen betreffend eine Masse des beförderten Körpers (10) zu erfassen, wobei:
die Anomaliebestimmungseinheit ausgelegt ist, um eine Anomalie betreffend die Beförderung des beförderten Körpers (10), einschließlich der Verschlechterung oder Anomalie der Förderoberfläche, basierend auf der Position, die durch die Positionsdetektionseinheit (51) detektiert wird, dem Strom, der durch die Stromdetektionseinheit (52) detektiert wird, den Daten und den Informationen betreffend die Masse zu bestimmen.

4. Fördervorrichtung (102) nach Anspruch 1,
wobei die Anomaliebestimmungseinheit ausgelegt ist, um eine Bestimmung der Anomalie durch Bewegen des beförderten Körpers (10), der eine bekannte Masse aufweist, auf der Förderoberfläche auszuführen.

5. Probenanalysesystem (100, 200), umfassend:
eine Analyseeinheit (105), die ausgelegt ist, damit eine Probe von einem beförderten Körper (10) darin injiziert wird, und um die Probe zu analysieren; und
eine Fördervorrichtung (102) nach Anspruch 1, die ausgelegt ist, um den beförderten Körper (10) in Richtung der Analyseeinheit (105) zu befördern.

6. Probenanalysesystem (100, 200) nach Anspruch 5, wobei die Anomaliebestimmungseinheit ausgelegt ist, um gemäß den Daten einen Schub (61) zum Bewegen des beförderten Körpers (10) entlang der Förderoberfläche und eine lotrechte Kraft (62), die auf den beförderten Körper (10) in eine Richtung lotrecht zur Förderoberfläche einwirkt, basierend auf der Position, die durch die Positionsdetektionseinheit (51) detektiert wird, und dem Strom, der durch die Stromdetektionseinheit (52) detektiert wird, zu bestimmen, und die ferner ausgelegt ist, um die Anomalie zu bestimmen, indem eine arithmetische Operation eines Reibungskoeffizienten der Förderoberfläche basierend auf der lotrechten Kraft (62) durchgeführt wird.

7. Probenanalysesystem (100, 200) nach Anspruch 5, das ferner eine Masseninformationserfassungseinheit (53) umfasst, die ausgelegt ist, um Informationen betreffend eine Masse des beförderten Körpers (10) zu erfassen, wobei:
die Anomaliebestimmungseinheit ausgelegt ist, um eine Anomalie betreffend die Beförderung des beförderten Körpers (10), einschließlich der Verschlechterung oder Anomalie der Förderoberfläche, basierend auf der Position, die durch die Positionsdetektionseinheit (51) detektiert wird, dem Strom, der durch die Stromdetektionseinheit (52) detektiert wird, den Daten und den Informationen betreffend die Masse zu bestimmen.

8. Probenanalysesystem (100, 200) nach Anspruch 5, wobei die Anomaliebestimmungseinheit ausgelegt ist, um eine Bestimmung der Anomalie durch Bewegen des beförderten Körpers (10), der eine bekannte Masse aufweist, auf der Förderoberfläche auszuführen.

## Revendications

1. Dispositif de transport (102), comprenant :
une plaque de transport (15) apte à transporter un corps transporté (10) le long d'une surface de transport ;
une unité de circuit magnétique agencée sur un côté opposé à la surface de transport de la plaque de transport (15) et présentant un enroulement (30) enroulé autour de dents ;
une unité de détection de position (51) configurée pour détecter une position du corps transporté (10) ;
une unité de détection de courant (52) configurée pour détecter un courant dans l'enroulement (30) ;
une unité d'estimation d'intervalle configurée pour estimer un intervalle (Dg) qui est une distance, dans une direction perpendiculaire, entre le corps transporté (10) et la surface de transport ;
une unité de stockage de données (130) configurée pour stocker des données indiquant une relation entre une position sur une surface de transport de la plaque de transport (15), un courant circulant dans l'enroulement (30), une force appliquée au corps transporté (10) et une taille de l'intervalle (Dg) ; et
une ne unité de détermination d'anomalie configurée pour déterminer une anomalie relative au transport du corps transporté (10), incluant une détérioration ou une anomalie de la surface de transport, sur la base de l'intervalle (Dg) estimé par l'unité d'estimation d'intervalle, de la position détectée par l'unité de détection de position (51), du courant détecté par l'unité de détection de courant (52), et des données.

2. Dispositif de transport (102) selon la revendication 1, dans lequel l'unité de détermination d'anomalie est configurée pour déterminer, conformément aux données, une poussée (61) destinée à déplacer le corps transporté (10) le long de la surface de transport et une force perpendiculaire (62) agissant sur le corps transporté (10) dans une direction perpendiculaire à la surface de transport, sur la base de la position détectée par l'unité de détection de position (51) et du courant détecté par l'unité de détection de courant (52), et est en outre configurée pour déterminer l'anomalie en effectuant une opération de calcul d'un coefficient de frottement de la surface de transport sur la base de la force perpendiculaire (62).

3. Dispositif de transport (102) selon la revendication 1, comprenant en outre une unité d'acquisition d'informations de masse (53) configurée pour acquérir des informations relatives à une masse du corps transporté (10), dans lequel
l'unité de détermination d'anomalie est configurée pour déterminer une anomalie relative au transport du corps transporté (10), incluant une détérioration ou une anomalie de la surface de transport, sur la base de la position détectée par l'unité de détection de position (51), du courant détecté par l'unité de détection de courant (52), des données et des informations relatives à la masse.

4. Dispositif de transport (102) selon la revendication 1, dans lequel l'unité de détermination d'anomalie est configurée pour exécuter une détermination de l'anomalie en déplaçant le corps transporté (10) ayant une masse connue sur la surface de transport.

5. Système d'analyse d'échantillon (100, 200), comprenant :
ne unité d'analyse (105) configurée pour recevoir par injection un échantillon provenant d'un corps transporté (10) et pour analyser l'échantillon ; et
un dispositif de transport (102) selon la revendication 1, configuré pour convoyer le corps transporté (10) vers l'unité d'analyse (105).

6. Système d'analyse d'échantillon (100, 200) selon la revendication 5, dans lequel l'unité de détermination d'anomalie est configurée pour déterminer, conformément auxdites données, une poussée (61) pour déplacer le corps transporté (10) le long de la surface de transport et une force perpendiculaire (62) agissant sur le corps transporté (10) dans une direction perpendiculaire à la surface de transport, sur la base de la position détectée par l'unité de détection de position (51) et du courant détecté par l'unité de détection de courant (52), et est en outre configurée pour déterminer l'anomalie en effectuant une opération de calcul d'un coefficient de frottement de la surface de transport sur la base de la force perpendiculaire (62).

7. Système d'analyse d'échantillon (100, 200) selon la revendication 5, comprenant en outre une unité d'acquisition d'informations de masse (53) configurée pour acquérir des informations relatives à une masse du corps transporté (10), dans lequel
l'unité de détermination d'anomalie est configurée pour déterminer une anomalie relative au transport du corps transporté (10), incluant une détérioration ou une anomalie de la surface de transport, sur la base de la position détectée par l'unité de détection de position (51), du courant détecté par l'unité de détection de courant (52), des données et des informations relatives à la masse.

8. Système d'analyse d'échantillon (100, 200) selon la revendication 5, dans lequel l'unité de détermination d'anomalie est configurée pour exécuter une détermination de l'anomalie en déplaçant le corps transporté (10) ayant une masse connue sur la surface de transport.
